Europäisches Patentamt

**European Patent Office**

Office européen des brevets

(11) Veröffentlichungsnummer: **0 099 417**
**B1**

(12) **EUROPÄISCHE PATENTSCHRIFT**

(45) Veröffentlichungstag der Patentschrift:
**18.01.89**

(51) Int. Cl.⁴: **G 05 D 23/19**, G 05 B 13/00,
**C 21 D 11/00**

(21) Anmeldenummer: **82106560.4**

(22) Anmeldetag: **21.07.82**

(54) Verfahren zur Steuerung der Energie-Zu- resp.-Abführung.

(43) Veröffentlichungstag der Anmeldung:
**01.02.84 Patentblatt 84/5**

(45) Bekanntmachung des Hinweises auf die Patenterteilung:
**18.01.89 Patentblatt 89/3**

(84) Benannte Vertragsstaaten:
**AT BE FR GB IT NL SE**

(56) Entgegenhaltungen:
**DE-A- 1 508 374**
**DE-A- 1 551 983**
**DE-C- 624 967**

**Die Akte enthält technische Angaben, die nach dem Eingang der Anmeldung eingereicht wurden und die nicht in dieser Patentschrift enthalten sind.**

(73) Patentinhaber: **Rossier, René, Rue Corniche du Soleille 37, CH-3964 Muraz (Sierre) (CH)**

(72) Erfinder: **Rossier, René, Rue Corniche du Soleille 37, CH-3964 Muraz (Sierre) (CH)**

(74) Vertreter: **Troesch, Hans Alfred, Dr. Ing. et al, Walchestrasse 19, CH-8035 Zürich (CH)**

## Beschreibung

Die vorliegende Erfindung betrifft Verfahren zur energieoptimalen Steuerung der Wärmezu- resp. -abführung an bzw. von einem thermisch zu behandelnden Gut, wobei charakteristische Daten für das Wärmeaufnahme- oder -abgabevermögen des Gutes bestimmt werden, daraus und der Kenntnis mindestens eines durch das Gut zu erreichenden Temperaturwertes die dazu notwendige Temperatur/Zeitfunktion für die Ansteuerung von Heiz- oder Kühlorganen für das Gut berechnet wird.

Die Erfindung stellt sich zur Aufgabe, die Wärmezu- oder -abführung an ein aufzuheizendes oder abzukühlendes Gut derart zu steuern, dass das angestrebte Ziel in energieoptimaler Weise erreicht wird. Das beispielsweise beim Anheben der Guttemperatur von einer Anfangs- zu einer höheren Endtemperatur die dazu vorgesehenen Heizorgane mit demselben Endeffekt verschieden betrieben werden können, beispielsweise durch Aufheizen gemäss der Vollkapazität der vorgesehenen Heizorgane zu Beginn, um die Heizenergie gegen Ende des Verfahrens wieder abzusenken, ist bekannt. Dass dabei jedoch die anfallenden Verluste ausserordentlich unterschiedlich sein werden, ergibt sich schon aus der Tatsache, dass die Strahlungsverluste der Heizorgane in etwa mit der vierten Potenz ihrer Temperaturdifferenz mit Bezug auf die Umgebung ansteigen, so dass bei einer Aussteuerung der Heizorgane auf Temperaturen, die zu hoch für das momentane Absorptionsvermögen der Materiephase sind, die Energie weitgehendst zur Aufwärmung der Umgebung verwendet wird.

Aus der DE-A-1 508 374 ist ein Verfahren obgenannter Gattung bekannt geworden. Die Optimierungsaufgabe wird gemäss dieser Schrift durch Berechnung partieller Differentialkoeffizienten vorgenommen, welche die Geschwindigkeit der Änderung des Brennstoffverbrauches bei Temperaturänderungen in verschiedenen Ofenzonen definieren und durch anschliessende Minimalisierung der Summe dieser partiellen Differentialkoeffizienten. Dabei werden auch während der Wärmebehandlung des Gutes Temperaturmessungen vorgenommen, die auf den Berechnungsprozess Einfluss nehmen.

Die vorliegende Erfindung setzt sich nun zum Ziel, ein derartiges Verfahren wesentlich zu vereinfachen.

Dies wird durch Verfahren gemäss Wortlaut der Ansprüche 1 oder 2 oder 3 erreicht.

Die Erfindung wird anschliessend beispielsweise anhand von Figuren erläutert.

Es zeigen:

Fig. 1 die schrittweise Rückwärtsberechnung charakteristischer Steuerdaten bei gleich lang gewählten Zeitinkrementen, im Zeit-Temperatur-Koordinatensystem und die daraus gefundene Temperatur/Zeit-Treppen-Steuerfunktion für einen Ofen,

Fig. 2 eine Darstellung analog zu Fig. 1, bei Vorgabe eines charakteristischen Temperaturzwischenwertes und einer nach dessen Erreichen einzuhaltenden Steuerbedingung,

Fig. 3 eine Darstellung analog zu den Fig. 1 und 2, bei Vorsehen von beispielsweise drei zeitlich ausgedehnten Steuerschritten.

Wie bereits erwähnt, geht es bei den nachfolgend beschriebenen Verfahren grundsätzlich darum, ein Gut, nachfolgend Materiephase genannt, von einer Anfangstemperatur auf eine Endtemperatur zu bringen, wobei man sie entweder von ihrer Randfläche her mittels Heiz- oder Abkühlorganen beheizt resp. abkühlt oder aber mittels Strahlung, beispielsweise Mikrowellenenergie, aufheizt. Nachfolgend stützt sich die Beschreibung auf die ersterwähnten Verfahren, wobei der Unterschied der beiden genannten vornehmlich darin besteht, dass bei ersterem, entsprechend der Wärmediffusionsgleichung, berücksichtigt werden muss, dass bis eine homogene Temperaturverteilung innerhalb der Materiephase bei Anlegen eines äusseren Temperaturschrittes erreicht ist, eine gewisse Zeit verstreichen kann, wogegen sich die Homogenitätsbedingungen bei Aufheizung mittels Strahlenenergie üblicherweise wesentlich rascher einstellen.

Die Erfindung beruht vorerst auf der Grunderkenntnis, dass es bei der Art und Weise, wie eine Materiephase von einer ersten Temperatur auf eine zweite gebracht wird, einen Weg gibt, der einen minimalen Energiekonsum erfordert und dabei die Temperaturdifferenz in optimal kurzer Zeit durchschreiten lässt. Dies wird beispielsweise dadurch plausibel, dass Abstrahlungsverluste mit der Temperatur, beispielsweise von Heizorganen, verglichen zur Umgebungstemperatur, sehr rasch ansteigen, und dass es deshalb wenig sinnvoll ist, eine Materiephase beispielsweise so aufzuheizen, dass ab Beginn volle Heizleistung vorgesehener Heizorgane aufgeschaltet wird. Thermodynamische Berechnungen eines derartigen Optimums führen zum Schluss, dass der erwähnte energie- und zeitoptimierte Weg dann wenigstens näherungsweise eingehalten wird, wenn folgende Kriterien berücksichtigt werden:

I. Die in einem Zeitpunkt pro Zeiteinheit von der Materiephase absorierte resp. abgegebene Wärme bzw. Energie ist in erster Näherung proportional zur Temperaturdifferenz bzw. Energiedifferenz zwischen Materiephase und Heiz- resp. Kühlorganen in diesem Zeitpunkt.

II. Diese in einem Zeitpunkt vorliegende Temperaturdifferenz bzw. Energiedifferenz zwischen Materiephase und Heiz- resp. Kühlorganen ist anderseits in erster Näherung umgekehrt proportional zur vorgängig pro Zeiteinheit absorbierten Energie bzw. Wärme.

Durch wenigstens näherungsweises Einhalten dieser Bedingungen wird der erwähnte zeitenergieoptimal Weg gefunden.

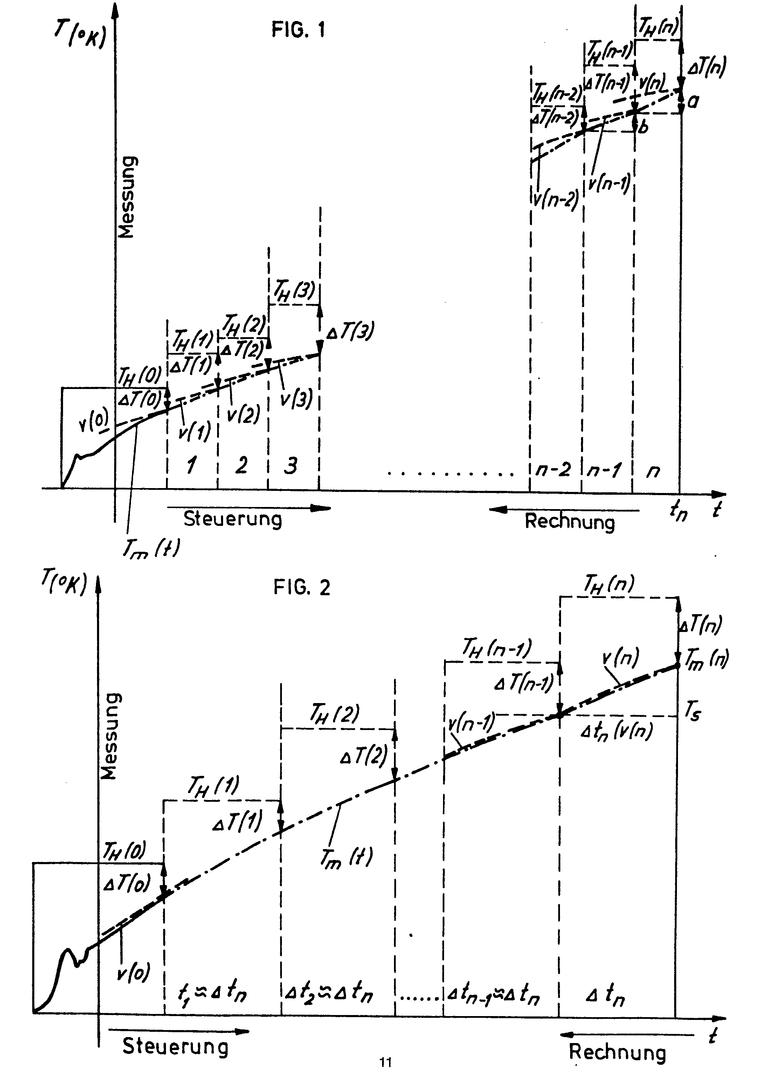

In die Praxis umgesetzt, lassen sich nun diese Erkenntnisse zur Steuerung der Heizorgane für eine Materiephase, wie anhand von Fig. 1 dargestellt, verwenden.

Zu Beginn des Verfahrens werden die Heizorgane für die Materiephase mit einem Temperaturschritt $T_H(o)$ beaufschlagt. Nach einer Anfangsphase, je nach der Materiephase mehr oder weniger unkontrollierten Einschwingens ihrer Temperatur, beginnt sich die Temperatur $T_m(t)$ der Materiephase zu heben, um dem Temperaturwert der Heizorgane $T_H(o)$ zuzustreben. In einem Zeitpunkt $t_o$, an welchem das dynamische Verhalten von $T_m(t)$ mehr oder weniger stetig geworden ist, wird die Temperaturanstiegsgeschwindigkeit bzw. -änderungsrate $v(o)$ der Materiephase und die dann vorherrschende Übertemperatur $\Delta T(o)$ der Heizorgane bezüglich der Materiephase gemessen. Für die Sicherstellung, dass die ganze Phase eine mindestens nahezu homogene Temperatur aufweist, wird dabei beispielsweise mittels eines thermoelektrischen Fühlers im Phaseninneren gemessen.

Es ist ersichtlich, dass gemäss (I) die Temperatur-Anstiegsgeschwindigkeit $v(t)$ der Materiephase der von letzterer pro Zeiteinheit absorbierten Energie entspricht. Ebenso entspricht die Übertemperatur $\Delta T(t)$ der Heizorgane bezüglich der Materiephase der Energiedifferenz zwischen Heizorganen und Materiephase.

Es werde nun gefordert, dass nach einer möglichst kurzen Zeit $t_n$ die Materiephase die Endtemperatur $T_m(n)$ erreicht habe, bei einer dann aufgeschalteten Ofenkapazität von $T_H(n)$ (gemäss einem vorgegebenen $\Delta T(n)$), beispielsweise entsprechend dessen voller Leistung. Der Zeitabstand $t_n - t_o$ wird in n kleine, gleiche Zeitabschnitte der Länge $\Delta t$, mit der Numerierung von 1 bis n, aufgeteilt. Im Zeitabschnitt n lässt sich nach (I) schreiben:

$$v(n) = v(o) \cdot \frac{\Delta T(n)}{\Delta T(o)} \qquad (1,n)$$

Aus (II) ergibt sich:

$$\frac{\Delta T(n)}{\Delta (T)n-1} = \frac{\{T_H(n-1) - \Delta T(n-1)\} - \{T_H(n-2) - \Delta T(n-2)\}}{\{T_H(n) \quad - \Delta T(n)\} \quad - \{T_H(n-1) - \Delta T(n-1)\}} \qquad (2,n)$$

Die Anstiegsgeschwindigkeit $v(n)$ kann weiter ausgedrückt werden zu:

$$v(n) \cdot \Delta t = \{T_H(n) - \Delta T(n)\} - \{T_H(n-1) - \Delta T(n-1\} \qquad (3,n)$$

Damit ergeben sich für die 5 unbekannten Grössen $v(n)$, $T_H(n-2)$, $\Delta T(n-2)$, $T_H(n-1)$ und

$$v(n-1) = v(o) \cdot \frac{\Delta T(n-1)}{\Delta T(o)} \qquad (1,n-1)$$

$$\frac{\Delta T(n-1)}{\Delta T(n-2)} = \frac{\{T_H(n-2) - \Delta T(n-2)\} - \{T_H(n-3) - \Delta T(n-3)\}}{\{T_H(n-1) - \Delta T(n-1)\} - \{T_H(n-2) - \Delta T(n-2)\}} \qquad (2,n-1)$$

$$v(n-1) \cdot \Delta t = \{T_H(n-1) - \Delta T(n-1)\} - \{T_H(n-2) - \Delta T(n-2)\} \qquad (3,n-1)$$

Es ergeben sich somit gesamthaft bis und mit Zeitabschnitt $n-1$ rückwärts betrachtet, sechs Gleichungen für geamthaft 8 Unbekannte. In analoger Weise lassen sich diese Gleichungen bis hin zum zweiten Schritt, also Schritt Nr. 2, finden. Dort lauten sie:

$$v(2) = v(o) \cdot \frac{\Delta T(2)}{\Delta T(o)} \qquad (1,1)$$

$$\frac{\Delta T(2)}{\Delta T(1)} = \frac{\{T_H(1) - \Delta T(1)\} - \{T_H(o) - \Delta T(o)\}}{\{T_H(2) - \Delta T(2)\} - \{T_H(1) - \Delta T(1)\}} \qquad (2,1)$$

$$v(2) \cdot \Delta t = \{T_H(2) - \Delta T(2)\} - \{T_H(1) - \Delta T(1)\} \qquad (3,1)$$

Gesamthaft liegen somit $3(n-1)$ Gleichungen vor für $3(n-1)$ Unbekannte mit den im Zeitabschnitt Nr. 0 bekannt vorausgesetzten Grössen $T_H(o)$, $\Delta T(o)$ in (2,1) eingesetzt.

Daraus ist aber ersichtlich, dass ein zeitenergieoptimaler Weg nur mit $n \geqslant 2$ überhaupt gefunden werden kann, d.h. es müssen mindestens zwei Steuerschritte vorgesehen werden, zusätzlich zum Schritt Nr. 0, in welchem die materialphasencharakteristischen Daten ermittelt werden.

Wie in Fig. 1 dargestellt, wird somit in der Zeit rückwärtsschreitend das obige Gleichungssystem gelöst und gemäss den gefundenen Werten für $T_H$ die Heizorgane angesteuert. Die Werte für $T_H$ werden dabei in K angegeben.

Bei sehr kleinen, praktisch infinitesimalen Schrittlängen $\Delta t$ wird somit ein quasi kontinuierliches Steuerverfahren geschaffen.

Es ist sofort ersichtlich, dass das beschriebene Verfahren sich ausgezeichnet für eine Rechnersteuerung eignet, wobei damit auch eine praktisch kontinuierliche Temperaturführung der Heiz- oder Kühlorgane ohne weiteres erreichbar ist, je nach betriebenem Rechenaufwand durch entsprechend kleine Wahl von $\Delta t$.

Es können nun Fälle auftreten, bei denen andere oder weitere Bedingungen an die Temperaturführung des Materials gestellt werden müssen. Dies beispielsweise bei der Wärmebehandlung von Metallen, wie von Aluminium. Hier stellt sich die Aufgabe, die Temperatur der Metallphase möglichst zeit- und energieoptimal an eine bestimmte Temperaturschwelle zu führen, um sie dann möglichst rasch um eine letzte Temperaturstufe zu erhöhen. Diese letzte Forderung ergibt sich daraus, dass bei der Überführung des Metalls bei einer derartigen Behandlung in einen tieferen Energiezustand eine Potentialschwelle überwunden werden muss, die es aber möglichst rasch zu überwinden gilt.

Eine leichte Abwandlung, des gemäss Fig. 1 dargestellten Verfahrens, für einen derartigen Fall, ist in Fig. 2 dargestellt. Auch hier werden zu Beginn des Verfahrens vorerst die charakteristischen Absorptionsgrössen der Materiephase bestimmt, nämlich zum Zeitpunkt $t_o$, die Temperaturanstiegsgeschwindigkeit $v(o)$, bei entsprechender Übertemperatur $\Delta T(o)$. Im weiteren ist bekannt, beispielsweise aus metallurgischen Kenntnissen, dass am Schluss der Wärmebehandlung das Metall auf der Temperatur $T_m(n)$ angelangt sein muss, für das schnellstmögliche, letztendliche Erreichen dieser Temperatur lediglich die maximale Ofenkapazität $T_H(n)$ zur Verfügung steht oder eine aus anderen Kriterien bestimmte Ofentemperatur $T_H(n)$ eingesetzt werden soll. Aus der Kenntnis heraus, dass ab einer in etwa bekannten Temperatur $T_S$, beispielsweise die angestrebte Umkristallisation einsetzt, und dass ab dann mit der gegebenen oder bestimmten Ofenkapazität zu fahren ist, wird im weiteren dieser charakteristische Temperaturwert $T_S$ vorgegeben.

In Analogie zu $(1-n)$ wird auch hier, entsprechend (I)

$$v(n) = v(o) \cdot \frac{\Delta T(n)}{\Delta T(o)} \qquad (1,n)$$

berechnet. Damit ergibt sich die Länge $\Delta t_n$, nun variabel, zu

$$\Delta t_n = \frac{T_m(n) - T_S}{v(n)} .$$

Es ergeben sich wieder, sofern $\Delta t_n$ in etwa gleich lang ist, wie die weiteren Schritte $\Delta t$ oder diese letzteren so gewählt werden, die Gleichungen $(2,n)$ und $(3,n)$, womit das Gleichungssystem, wie anhand von Fig. 1 gezeigt wurde, lösbar wird.

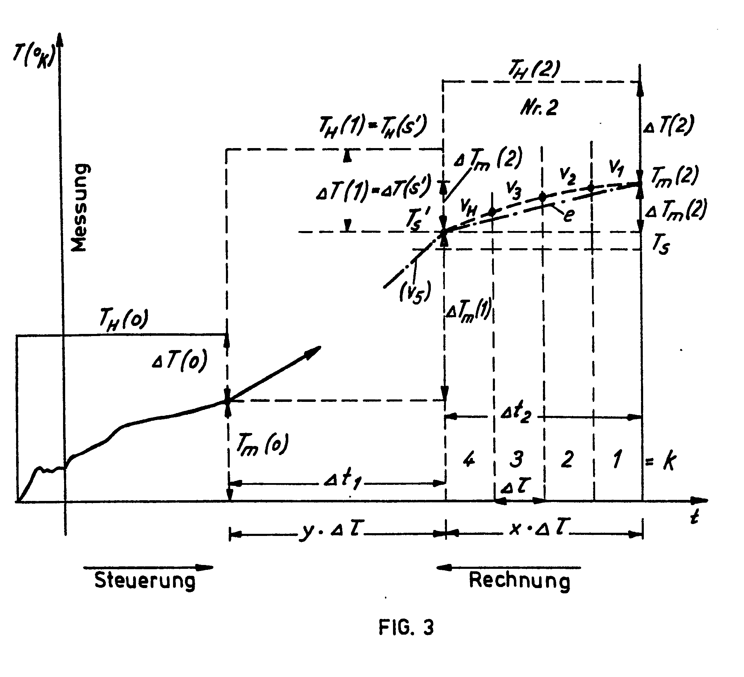

Es ist nun durchaus möglich, dass in der Praxis die Führung der Heizorgane in vielen Einzelintervallen $\Delta t$ zu aufwendig ist: Es sollen nur einige wenige, z. B. gesamthaft drei, Schritte für die Heizorgansteuerung vorgesehen werden, d.h. neben dem Messschritt 0 noch ein Schritt «1» und der Endschritt «2». Zudem ist es beim anhand von Fig. 2 dargestellten Verfahren durchaus möglich, dass nach Massgabe der zur Verfügung stehenden oder gegebenen Heizorgankapazitäten $T_H(n)$ das sich ergebende $\Delta t_n$ relativ lang wird, wodurch die lineare Interpolation zwischen $T_m(n)$ und $T_S$ zu ungenau wird. Es wird nun im folgenden anhand von Fig. 3 ein auf den oben gemachten Ausführungen basierendes, jedoch für diesen Zweck vereinfachtes Verfahren dargestellt, worin die unter (I) und (II) gemachten ersten Näherungsaussagen zu einer zweiten Näherung korrigiert werden. Dies hat sich insbesondere deshalb als notwendig erwiesen, weil die bei einem solchen Wärmebehandlungsverfahren anfallenden wenigen Zeitschritte sich über Stunden erstrecken können.

Wiederum wird zu Beginn des Verfahrens durch den Ofen ein Temperaturschritt $T_H(o)$ angelegt und nach unregelmässigem Einschwingen von $T_m(t)$ die Übertemperatur $\Delta T(o)$ und die für die Absorptionsfähigkeit charakteristische Temperatur-Anstiegsgeschwindigkeit $v(o)$ gemessen. Im weiteren ist die Endtemperatur $T_m(2)$, ebenso wie die am Ende anzulegende Ofenkapazität $T_H(2)$ gegeben. Zudem ist bekannt, dass ab der Temperatur $T_S$ die erwünschte Umkristallisation einsetzt und dass ab diesem Moment mit maximaler oder sonst gegebener Ofenkapazität entsprechend $T_H(2)$ zu heizen ist. Da entsprechend der zur Verfügung stehenden oder vorgegebenen Ofenkapazität $T_H(2)$ während einer relativ langen Zeit von beispielsweise 30 Minuten mit dieser Leistung zu heizen sein wird, um am $T_S$ möglichst rasch $T_m(2)$ zu erreichen, wird vorerst eine noch unbestimmte Anzahl kleiner Zeitintervalle $\Delta \tau$, gemäss Fig. 3 festgelegt. Entsprechend der in Fig. 3 rückwärts eingetragenen Numerierung k der Zeitabschnitte gleicher Länge $\Delta \tau$ wird nun gemäss der in zweiter Näherung korrigierten Bedingung (I):

$$v_k = v(o) \cdot \frac{\Delta T(2)}{\Delta T(o)^k} \cdot \left[ S_T \cdot \Delta T(o) + S_v \cdot v(o) \right]^{k-1} \qquad (4)$$

für jeden dieser Zeitabschnitte die Geschwindigkeit $v_k$ berechnet.

Die Skalierung des rechten Faktors wird vorzugsweise wie folgt bestimmt. Aus

$$v(o) = \frac{dT}{dt} \qquad (5)$$

wird $dT = dT_E$ als Temperatureinheit gewählt, dt $= dt_E$ als Zeiteinheit sowie $v(o) = v_E$ als Geschwindigkeitseinheit. Somit werden die Skalierungsgrössen vorzugsweise zu

$$S_v = \frac{1}{v(o)} \qquad (6)$$

$$S_T = \frac{1}{dT_E}$$

gewählt.

Die Geschwindigkeit $v_k$ wird nun so lange berechnet, bis gilt:

$$\sum_{k=1}^{x} v_k \cdot \Delta\tau - \{T_m(2) - T_s\} \qquad (7)$$

$$= \text{minimal und grösser Null}$$

d.h. bis der Stützwert $T_S$ möglichst exakt von oben her erreicht wird. Daraus resultiert die Anzahl vorzusehender Schritte x.

In Fig. 3 ist x = 4 dargestellt. Bei x = 5 würde die Bedingung (7) bereits nicht mehr erfüllt.

Nun wird gemäss

$$\overline{v(2)} = \frac{\sum_{k=1}^{x} v_k}{k} \qquad (8)$$

die mittlere Geschwindigkeit $\overline{v(2)}$ im Zeitabschnitt «2» der Gesamtlänge $x \cdot \Delta\tau$ berechnet.

Die Länge dieses Zeitabschnittes ist in Fig. 3 als $\Delta t_2$ bezeichnet und ergibt sich zu:

$$\Delta t_2 = x \cdot \Delta\tau \qquad (9)$$

Da im hier beschriebenen Fall lediglich zwei eigentliche Ofenansteuerungszeiträume vorgesehen sind, entsprechend n = 2, müssen noch die Verhältnisse im mittleren Zeitabschnitt «1» bestimmt werden. Am einfachsten erfolgt dies wie folgt: Man geht davon aus, dass sich die Zeitabschnitte $\Delta t_2$ zu $\Delta t_1$ so verhalten müssen, wie die in den jeweiligen Zeitabschnitten zu absorbierenden Energien, d.h. es wird im Zeitabschnitt Nr. 1 eine der mittleren für den Zeitabschnitt Nr. 2 errechneten Geschwindigkeiten $\overline{v(2)}$ entsprechende Geschwindigkeit angenommen. Dann ergibt sich für die Anzahl y der Zeitschritte der Länge $\Delta\tau$ im mittleren Abschnitt Nr. 1

$$\frac{y}{x} = \frac{T'_S - T_m(o)}{T_m(2) - T'_S} \cdot \qquad (10)$$

Vorzugsweise wird der errechnete Wert $T_S'$ und nicht der zu erreichende $T_S$ eingesetzt. Aus (10) ergibt sich die gesuchte Schrittzahl y.

Nun wird Formel (II) resp. (2,n) in zweiter Näherung präzisiert, wie folgt angewendet:

$$\frac{\Delta T(1)}{\Delta T(2)} = \frac{y}{x} \sqrt{\frac{\Delta T_m^2(2) + S_t^2(x \cdot \Delta\tau)^2}{\Delta T_m^2(1) + S_t^2(y \cdot \Delta\tau)^2}} \qquad (11)$$

wobei gilt:

$$\Delta T_m(2) = \{T_H(2) - \Delta T(2)\} - \{T_H(1) - \Delta T(1)\}$$

$$= \{T_H(2) - \Delta T(2)\} - \{T_H(s') - \Delta T(s')\}$$

und analog für $\Delta T_m(1)$.

Ausdruck (11) sagt aus, dass die Temperaturdifferenz zwischen der Materiephase und den Heizresp. Abkühlorganen, am Ende eines betrachteten Zeitabschnittes umgekehrt proportional zur Sehnenlänge l zwischen der Materietemperatur zu Beginn und am Ende dieses Abschnittes ist, im Temperatur-Zeit-Diagramm betrachtet sowie proportional ist zur Länge des betrachteten Zeitabschnittes.

Dabei ist $\Delta T_m(2)$ die im Zeitabschnitt 2, $\Delta T_m(1)$ die im Abschnitt 1 absorbierte Energie, die dem Temperaturunterschied zwischen $T_s'$ und $T_m(o)$ entspricht. Die Skalierungsgrösse ergibt sich nach der eingeführten Konvention zu:

$$S_t = \frac{1}{dt_E}$$

Aus (11) wird $\Delta T(1)$ bestimmt, womit die Ofentemperatur $T_H(1)$ aus $T_H(1) = T_s' + \Delta T(1)$ im mittleren Abschnitt 1 gegeben ist.

Es versteht sich von selbst, dass je nach den Erwägungen bezüglich des Verhältnisses Einsparungen/Aufwand die dargestellten Methoden kombiniert werden können.

Das dargestellte Verfahren beruht zusammenfassend also darauf, dass zu Beginn das charakteristische Absorptionsverhalten der Wärme der zu behandelnden Materiephase ermittelt wird, und dass unter Berücksichtigung von (I) und (II) der optimal zu durchfahrende Absorptionsweg in der Zeit mit den entsprechend erforderlichen Energiezufuhren berechnet wird, derart, dass erwünschte Endverhältnisse und/oder Zwischenverhältnisse erreicht werden.

Eine weitere Verfeinerung des Verfahrens ergibt sich nun dadurch, dass während der eigentlichen Verfahrensausführung d.h. während die vorgängig berechneten Grössen für die Ofensteuerung bereits angewendet werden, laufend die sich einstellenden IST-Verhältnisse $T_m(t)$ mit den vorausberechneten SOLL-Verhältnissen verglichen werden, um jeweils die Rückwärtsrechnung derart wieder vorzunehmen, dass die sich in Realität einstellenden IST-Verhältnisse als neue Vorgaben verwendet und daraus laufend korrigierte Steuerdaten errechnet werden. Es ergibt sich damit praktisch ein adaptives Steuer- resp. Regelverfahren, indem in erster Phase eine Systemidentifikation zu Beginn des Verfahrens erfolgt, daraus eine erste Näherungssteuerfunktion in Form der schrittweise notwendigen Energiezufuhren entsprechend $T_H$ errechnet wird, die Energiezufuhr entsprechend diesen errechneten Werten real gesteuert wird, dann beobachtet wird, wie genau das System der berechneten Hypothese folgt, um aus beobachteten Abweichungen die vorgängig errechneten Steuergrössen laufend anzupassen. Das vorgeschlagene Verfahren kann grundsätzlich überall eingesetzt werden, wo es gilt, Materiephasen zu erwärmen oder abzukühlen. Die resultierenden Einsparungen rechtfertigen aber den getriebenen Aufwand vor allem bei derartigen Grossanlagen, wie für die Durchlaufwärmebehandlung von Metallen, unter Einsatz von Rechnern resp. Mikrocomputern.

Bereits grobe Vorausberechnungen, wie sie anhand von Fig. 3 dargestellt worden sind, ohne das System während der eigentlichen Steuerungsphase zu beobachten und die Steuergrössen anzupassen, ergeben wesentliche Energie- und Zeiteinsparungen gemäss ersten Erfahrungswerten bis über 50% Leistungseinsparung.

## Patentansprüche

1. Verfahren zur energieoptimalen Steuerung der Wärmezu- resp. -abführung an ein bzw. von einem thermisch zu behandelnden Gut, wobei charakteristische Daten für das Wärmeaufnahme- oder -abgabevermögen des Gutes bestimmt werden, daraus und der Kenntnis mindestens eines durch das Gut zu erreichenden Temperaturwertes die dazu notwendige Temperatur/Zeitfunktion für die Ansteuerung von Heiz- oder Kühlorganen für das Gut berechnet wird, dadurch gekennzeichnet, dass man

$a_1$) zu Beginn die Temperaturänderungsrate $(v(o))$ des Gutes, ausgehend von seiner Anfangstemperatur, bei Anlegen eines Heiz- oder Kühlorgan-Temperaturschrittes am Ende eines vorgegebenen Identifikations-Zeitabschnittes bestimmt, ebenso die Guttemperatur $(T_m(o))$,

$b_1$) die Temperaturänderungsrate $(v(o))$, die Guttemperatur $(T_m(o))$ und die aus dem Temperaturschritt resultierende Heiz- oder Kühlorgantemperatur $(T_H(o))$ als Anfangswerte der folgenden Wärmebehandlung vorgibt,

$c_1$) eine Zieltemperatur $(T_m(n))$ für das Gut und die dann einzustellende Heiz- oder Kühlorgantemperatur $(T_H(n))$ als Endwerte vorgibt,

$d_1$) einen Zeitraum für die folgende Wärmebehandlung vorgibt und in $(n)$ Zeitabschnitte gleicher Länge $(\Delta t)$ unterteilt, für welche die einzustellende Heiz- oder Kühlorgantemperatur ermittelt werden soll,

$e_1$) ausgehend von den Endwerten, unter Einbeziehung der zu Beginn bestimmten Anfangswerte, von Zeitabschnitt zu Zeitabschnitt rückwärtsschreitend für jeden Zeitabschnitt Gleichungen aufstellt, die aussagen, dass, in erster Näherung,

– die momentane Temperaturänderungsrate $(v(t))$ des Gutes pro Zeiteinheit proportional zur momentanen Temperaturdifferenz $(\Delta T(t))$ zwischen dem Gut und den Heiz- oder Kühlorganen ist, und dass

– diese Temperaturdifferenz umgekehrt proportional zur vorgängig pro Zeiteinheit vom Gut aufgenommenen oder abgegebenen Wärmemenge ist,

$f_1$) das aus den Gleichungen gebildete Gleichungssystem zum Erhalt der einzustellenden Heiz- oder Kühlorgantemperatur-Zeitabfolge auflöst.

2. Verfahren nach Anspruch 1, dadurch gekennzeichnet, dass man anstelle der Merkmale nach $d_1$) bis und mit $f_1$):

$d_2$) eine Gutzwischentemperatur $(T_S)$ vorgibt, bei deren Erreichen die Temperatur der Heiz- oder Kühlorgane auf einen vorgegebenen Wert $(T_H(2))$ zu ändern ist;

$e_2$) die Länge $(\Delta \tau)$ einer noch unbestimmten Anzahl Zeitsegmente vorgibt,

$f_2$) aus Gleichungen, die ausdrücken, dass in erster Näherung

– die momentane Temperaturänderungsrate $(v)$ des Gutes pro Zeiteinheit proportional zur momentanen Temperaturdifferenz $(\Delta T)$ zwischen dem Gut und den Heiz- oder Kühlorganen ist, für jedes Zeitsegment diese Temperaturänderungsrate $(v)$ berechnet,

$g_2$) aus der Summe der Produkte dieser Temperaturänderungsraten und der vorgegebenen Länge $(\Delta \tau)$ der Zeitsegmente die Anzahl Zeitsegmente und somit die Zeitspanne, während der die Temperatur der Heiz- oder Kühlorgane auf dem vorgegebenen Wert $(T_H(2))$ zu halten ist, so berechnet, dass der Verlauf der Guttemperatur, ausgehend von der Zieltemperatur $(T_m(2))$, rückwärtsschreitend die Zwischentemperatur $(T_S)$ mindestens genähert durchläuft;

$h_2$) unter Einbeziehung der zu Beginn bestimmten Anfangswerte aus Gleichungen, die ausdrücken, dass in erster Näherung

– die genannte momentane Temperaturdifferenz $(\Delta T)$ umgekehrt proportional zur vorgängig pro Zeiteinheit vom Gut aufgenommenen oder abgegebenen Wärmemenge ist, den Zeitverlauf der Heiz- oder Kühlorgantemperatur ab Beginn bis zum Durchlaufen der Zwischentemperatur $(T_S)$ bestimmt.

3. Verfahren nach Anspruch 1, dadurch gekennzeichnet, dass man anstelle des Merkmales $d_1$) wie folgt vorgeht:

$d_{31}$) eine Gutzwischentemperatur $(T_S)$ vorgibt, bei deren Erreichen die Temperatur der Heiz- oder Kühlorgane auf einen vorgegebenen Wert $(T_H(n))$ zu ändern ist;

$d_{32}$) die Länge einer Zeitspanne $(\Delta t_n)$ zwischen Erreichen der Zwischentemperatur $(T_S)$ und Erreichen der Zieltemperatur $(T_m(n))$ des Gutes aus einer Gleichung, die aussagt, dass

– die Temperaturänderungsrate $(v(n))$ während dieser Zeitspanne $(\Delta t_n)$ sich zu derjenigen $(v(o))$, die zu Beginn bestimmt wird, wie die Differenz $(\Delta T(n))$ vom vorgegebenen Wert $(T_H(n))$ und der Zieltemperatur $(T_m(n))$ des Gutes zur Differenz $(\Delta T(o))$ von der Heiz- oder Kühlorgantemperatur $(T_H(o))$ zu der Guttemperatur $(T_m(o))$ zu Beginn, verhält, bestimmt und diese Länge als Länge der Zeitabschnitte $(\Delta t)$ einsetzt.

4. Verfahren nach Anspruch 1, 2 oder 3, dadurch gekennzeichnet, dass man die erste Näherung, wonach die Temperaturdifferenz umgekehrt proportional zur vorgängig pro Zeiteinheit vom Gut aufgenommenen oder abgegebenen Wärmemenge ist, dahingehend korrigiert, dass diese Temperaturdifferenz $(\Delta T(n))$ zwischen Materiephase und Heiz- resp. Kühlorganen am Ende eines betrachteten Zeitabschnittes im Temperaturzeitdiagramm umgekehrt proportional zur Sehnenlänge zwischen der Temperatur des Gutes zu Beginn und am Ende dieses Abschnittes ist sowie proportional ist zur Länge (y) des betrachteten Zeitabschnittes.

5. Verfahren nach Anspruch 2 oder 4, dadurch gekennzeichnet, dass man die erste Näherung gemäss $f_2$) für die Temperaturänderungsrate wie folgt korrigiert:

$$v_k = v(o) \cdot \frac{\Delta T(n)}{\Delta T(o)^k} \cdot \left[ S_T \cdot \Delta T(o) + S_v v(o) \right]^{k-1}$$

wobei bedeuten:

$v_k$ die Temperaturänderungsrate im Zeitsegment Nr k, vom Ende der Zeitspanne aus gezählt;

$\Delta T(n)$ die Differenz zwischen der Guttemperatur und der Temperatur der Heiz- resp. Abkühlorgane am Ende der Zeitspanne (x · $\Delta\tau$);

$\Delta T(o)^k$ die Differenz zwischen der Guttemperatur und der Temperatur der Heiz- resp. Abkühlorgane bei $a_1$), potenziert mit der Anzahl rückwärts gezählter Zeitsegmente ab Ende der Zeitspanne (x · $\Delta\tau$) bis zum betrachteten Zeitsegment.

6. Verfahren nach einem der Ansprüche 1–5, dadurch gekennzeichnet, dass es in Verbindung mit der Ofensteuerung von Wärmebehandlungsanlagen für Metalle, insbesondere für Aluminium ausgeübt wird.

7. Verfahren nach einem der Ansprüche 1–5, dadurch gekennzeichnet, dass es in Verbindung mit rechnergestützten Heiz- oder Kühlorgansteuerungen ausgeübt wird.

**Claims**

1. Process for the energy-optimal control of heat supply or removal to a and, respectively, from a material to be thermally treated, characteristic data for the heat absorption or dissipation capacity of the material being determined, the necessary temperature/time function for the activation of heating or cooling elements for the material being calculated from the said data and the knowledge of at least one temperature value to be reached by the material, characterized by the following procedure

$a_1$) at the beginning, the rate of temperature change (v(o)) of the material is determined, when, starting from its initial temperature, a heating or cooling element temperature step is applied and at the end of a specified identification period, and then the material temperature ($T_m$(o)) is determined too,

$b_1$) the rate of temperature change (v(o)), the material temperature ($T_m$(o)) and the resultant heating or cooling element temperature ($T_H$(o)) from the temperature step are taken as initial values of the following heat treatment,

$c_1$) a target temperature ($T_m$(n)) for the material and the heating or cooling element temperature then to be set ($T_H$(n)) are specified as final values,

$d_1$) a period of time for the subsequent heat treatment is specified and subdivided into (n) periods of equal length ($\Delta t$), for which the heating or cooling element temperature to be set is to be determined,

$e_1$) starting from the final values, equations incorporating the initial values determined at the beginning and stating that, in first approximation,
- the instantaneous rate of temperature change (v(t)) of the material per unit of time is proportional to the instantaneous temperature difference ($\Delta T$(t)) between the material and the heating or cooling elements, and that
- this temperature difference is inversely proportional to the amount of heat previously absorbed or dissipated per unit of time by the material, are formed for each period, working back from period to period,

$f_1$) the system of equations formed from the equations is resolved to obtain the heating or cooling element temperature sequence to be set.

2. Process according to Claim 1, characterized by the following procedure instead of the features according to $d_1$) to and including $f_1$):

$d_2$) a material intermediate temperature ($T_s$) is specified, upon reaching which the temperature of the heating or cooling elements is to be changed to a specified value ($T_H$(2));

$e_2$) the length ($\Delta\tau$) of a still undetermined number of time segments is specified,

$f_2$) the rate of temperature change (v) is calculated for each time segment from equations which express, in first approximation, that
- this instantaneous rate of temperature change (v) of the material per unit of time is proportional to the instantaneous temperature difference ($\Delta T$) between the material and the heating or cooling elements,

$g_2$) from the sum of the products of these rates of temperature change and the specified length ($\Delta\tau$) of the time segments, the number of time segments and thus the period of time during which the temperature of the heating or cooling elements is to be kept at the specified value ($T_H$(2)) is calculated such that the progression of the material temperature, working back from the target temperature ($T_m$(2)), passes at least approximately through the intermediate temperature ($T_s$);

$h_2$) incorporating the initial values determined at the beginning, from equations which express that, in first approximation, that
- the said instantaneous temperature difference ($\Delta T$) is inversely proportional to the amount of heat absorbed or dissipated previously per unit of time by the material, the time progression of the heating or cooling element temperature from the beginning until passing through the intermediate temperature ($T_s$) is determined.

3. Process according to Claim 1, characterized in that the following procedure is adopted instead of feature $d_1$):

$d_{31}$) a material intermediate temperature ($T_s$) is specified, upon reaching which the temperature of the heating or cooling elements is to be changed to a specified value ($T_H(n)$);

$d_{32}$) the length of a period of time ($\Delta t_n$) between reaching the intermediate temperature ($T_S$) and reaching the target temperature ($T_m(n)$) of the material is determined from an equation which states that

– the rate of temperature change ($v(n)$) during this period of time ($\Delta t_n$) behaves with respect to the rate determined at the beginning ($v(o)$) like the difference ($\Delta T(n)$) between the specified value ($T_m(n)$) and the target temperature ($T_m(n)$) of the material with respect to the difference ($\Delta T(o)$) between the heating or cooling element temperature ($T_H(o)$) and the material temperature ($T_m(o)$), at the beginning,

and this length is used as length of the periods ($\Delta t$).

4. Process according to Claim 1, 2 or 3, characterized in that the first approximation, according to which the temperature difference is inversely proportional to the amount of heat absorbed or dissipated previously per unit of time by the material, is corrected to the extent that this temperature difference ($\Delta T(n)$) between material phase and heating or cooling elements at the end of a given period in the temperature/time diagram is inversely proportional to the chord length between the temperature of the material at the beginning and at the end of this period and is proportional to the length ($y$) of the given period.

5. Process according to Claim 2 or 4, characterized in that the first approximation according to $f_2$) for the rate of temperature change is corrected as follows:

$$v_k = v(o) \cdot \frac{\Delta T(n)}{\Delta T(o)^k} \cdot \left[ S_T \cdot \Delta T(o) + S_v \, v(o) \right]^{k-1}$$

where:

$v_k$ is the rate of temperature change in the time segment no. k, counted from the end of the period of time;

$\Delta T(n)$ is the difference between the material temperature and the temperature of the heating or cooling elements at the end of the period of time ($x \cdot \Delta \tau$);

$\Delta T(o)^k$ is the difference between the material temperature and the temperature of the heating or cooling elements at $a_1$), exponentiated by the number of backward-counted time segments from the end of the period of time ($x \cdot \Delta \tau$) to the time segment considered.

6. Process according to one of Claims 1 to 5, characterized in that it is carried out in conjunction with the furnace control of heat treatment installations for metals, in particular for aluminium.

7. Process according to one of Claims 1 to 5, characterized in that it is carried out in conjunction with computer-aided heating or cooling element controls.

**Revendications**

1. Procédé pour commander, d'une manière optimale du point de vue énergétique, l'apport ou le prélèvement de chaleur à ou à partir d'une substance devant être soumise à un traitement thermique, et selon lequel on détermine des données caractéristiques concernant le pouvoir d'absorption ou de dissipation de chaleur de la substance et on calcule, à partir de ces données et de la connaissance d'au moins une valeur de température devant être atteinte par la substance, la fonction température/temps nécessaire à cet effet pour la commande d'unités de chauffage ou de refroidissement de la substance, caractérisé en ce que:

$a_1$) au départ, on détermine le taux ($v(o)$) de variation de la température de la substance, à partir de sa température initiale, lors de la mise en œuvre d'un pas de modification de la température des unités de chauffage ou de refroidissement à la fin d'un intervalle de temps prédéterminé d'identification, et également la température ($T_m(o)$) de la substance;

$b_1$) on prédétermine le taux ($v(o)$) de variation de la température, la température ($T_m(o)$) de la substance et la température ($T_H(o)$) des unités de chauffage ou de refroidissement, résultant du pas de modification de la température, en tant que valeurs initiales du traitement thermique ultérieur;

$c_1$) on prédétermine une température cible ($T_m(n)$) pour la substance et la température ($T_H(n)$) des unités de chauffage ou de refroidissement, qui doit être alors réglée, en tant que valeurs finales;

$d_1$) on prédétermine une période de temps pour le traitement thermique ultérieur et on le subdivise en ($n$) intervalles de temps de même durée ($\Delta t$), pour lesquels il faut déterminer la température, devant être réglée, des unités de chauffage ou de refroidissement;

$e_1$) à partir des valeurs finales, on forme pour chaque intervalle de temps, par pas rétrogrades d'un intervalle de temps à un autre, et en introduisant les valeurs initiales déterminées au départ, des équations qui indiquent que, en première approximation,

– le taux instantané ($v(t)$) de variation de la température de la substance par unité de temps est proportionnel à la différence instantanée de température ($\Delta T(t)$) entre la substance et les unités de chauffage ou de refroidissement, et que

– cette différence de température est inversement proportionnelle à la quantité de chaleur antérieurement absorbée par la substance ou dissipée par cette dernière par unité de teps;

$f_1$) on résout le système formé par les équations de manière à obtenir une séquence temporelle, devant être réglée, de températures des unités de chauffage ou de refroidissement.

2. Procédé selon la revendication 1, caractérisé en ce qu'à la place des caractéristiques selon $d_1$) jusqu'à $f_1$) compris:

$d_2$) on prédétermine une température intermédiaire ($T_S$) de la substance, à laquelle, lorsqu'elle est atteinte, la température des unités de chauffage ou de refroidissement doit être modifiée en étant réglée à une valeur prédéterminée ($T_H(2)$);

$e_2$) on détermine la durée ($\Delta\tau$) d'un nombre, encore indéterminé, de créneaux temporels:

$f_2$) à partir d'équations qui expriment que, en première approximation,

– le taux instantané (v) de variation de la température de la substance par unité de temps est proportionnel à la différence de température instantanée ($\Delta T$) entre la substance et les unités de chauffage ou de refroidissement;

on calcule ce taux (v) de variation de la température pour chaque créneau temporel;

$g_2$) à partir de la somme des produits de ces taux de variation de la température et des durées prédéterminées ($\Delta\tau$) des créneaux temporels, on calcule le nombre des créneaux temporels et partant l'intervalle de temps, pendant lequel la température des unités de chauffage ou de refroidissement doit être maintenue à la valeur prédéterminée ($T_H(2)$), de manière que la variation de la température de la substance passe au moins de façon approximative par la température intermédiaire ($T_S$), dans le sens rétrograde à partir de la température cible ($T_m(2)$);

$h_2$) en introduisant les valeurs initiales déterminées au départ, on détermine, à partir d'équations qui expriment que, en première approximation,

– ladite différence instantanée de température ($\Delta T$) est inversement proportionnelle à la quantité de chaleur antérieurement absorbée par la substance ou dissipée par cette dernière par unité de temps,

la variation dans le temps de la température des unités de chauffage ou de refroidissement depuis le départ jusqu'à ce que la température intermédiaire ($T_S$) soit atteinte.

3. Procédé selon la revendication 1, caractérisé en ce qu'à la place de la caractéristique $d_1$), on procède comme suit:

$d_{31}$) on prédétermine une température intermédiaire ($T_S$) de la substance, à laquelle, lorsqu'elle est atteinte, il faut modifier la température des unités de chauffage ou de refroidissement à une valeur prédéterminée ($T_H(n)$);

$d_{32}$) on détermine la durée d'un intervalle de temps ($\Delta t_n$) entre le moment où la température intermédiaire ($T_S$ est atteinte et le moment où la température cible ($T_m(n)$) de la substance est atteinte, à partir d'une équation indiquant que

– le taux (v(n)) de variation de la température pendant cet intervalle de temps ($\Delta t_n$) se comporte par rapport aux taux (v(o)) de variation de la température, qui est déterminé au départ, comme la différence ($\Delta T(n)$) entre la valeur prédéterminée ($T_H(n)$) et la température cible

($T_m(n)$) de la substance par rapport à la différence ($\Delta T(o)$) entre la température ($T_H(o)$) des unités de chauffage ou de refroidissement et la température ($T_m(o)$) de la substance au départ, et on utilise cette durée en tant que durée des intervalles de temps ($\Delta t$).

4. Procédé selon la revendication 1, 2 ou 3, caractérisé en ce qu'on corrige la première approximation, selon laquelle la différence de température est inversement proportionnelle à la quantité de chaleur antérieurement absorbée par la substance ou dissipée par cette dernière par unité de temps, de manière que cette différence de température ($\Delta T(n)$) entre la phase matérielle et les unités de chauffage ou de refroidissement à la fin d'un intervalle de temps considéré soit, sur le diagramme temporel de température, inversement proportionnelle à la longueur de la corde entre la température de la substance au départ et à la fin de cet intervalle de temps, et soit proportionnelle à la durée (y) de l'intervalle de temps considéré.

5. Procédé selon la revendication 2 ou 4, caractérisé en ce qu'on corrige la première approximation selon $f_2$) pour le taux de variation de la température de la manière suivante:

$$v_k = v(o) \cdot \frac{\Delta T(n)}{\Delta T(o)^k} \cdot \left[ S_T \cdot \Delta T(o) + S_v v(o) \right]^{k-1}$$

avec:

$v_k$ taux de variation de la température pendant le créneau temporel de rang k, compté à partir de la fin de l'intervalle de temps;

$\Delta T(n)$ différence entre la température de la substance et la température des unités de chauffage ou de refroidissement à la fin de l'intervalle de temps ($x \cdot \Delta\tau$);

$\Delta T(o)^k$ différence entre la température de la substance et la température des unités de chauffage ou de refroidissement en $a_1$), élevée à une puissance égale au nombre des créneaux temporels comptés de façon rétrograde depuis la fin de l'intervalle de temps ($x \cdot \Delta\tau$) jusqu'au créneau temporel considéré.

6. Procédé selon l'une des revendications 1–5, caractérisé en ce qu'on le met en œuvre en liaison avec la commande de fours d'installations de traitement thermique pour des métaux, notamment de l'aluminium.

7. Procédé selon l'une des revendications 1–5, caractérisé en ce qu'on le met en œuvre en liaison avec des dispositifs de commande, assistés par ordinateur, d'unités de chauffage ou de refroidissement.

FIG. 1

FIG. 2

FIG. 3